# EUROPÄISCHE PATENTSCHRIFT

(11) **EP 1 859 329 B1**
(45) Veröffentlichungstag und Bekanntmachung des Hinweises auf die Patenterteilung: **03.12.2008**
(21) Anmeldenummer: 06707371.8
(22) Anmeldetag: 02.03.2006
(51) Int. Cl.: G05D 7/01

(54) **DURCHFLUSSMENGENREGLER**
FLOW REGULATOR
REGULATEUR DE DEBIT

(30) Priorität: 14.03.2005 DE 202005004196 U
(43) Veröffentlichungstag der Anmeldung: 28.11.2007
(73) Patentinhaber: Neoperl GmbH, 79379 Müllheim (DE)
(72) Erfinder: ZOLLER, Uwe, 79424 Auggen (DE)
(74) Vertreter: Maucher, Wolfgang
(86) Internationale Anmeldenummer: PCT/EP2006/001895
(87) Internationale Veröffentlichungsnummer: WO 2006/097200

(56) Entgegenhaltungen:
- DE-A1- 19 851 151
- DE-C1- 10 228 490
- GB-A- 2 341 660
- US-B1- 6 595 235

## Beschreibung

Die Erfindung bezieht sich auf einen Durchflussmengenregler mit einem Reglergehäuse, das in einem Durchtrittskanal eine Regeleinrichtung mit einem Zentralkörper aufweist, den ein ringförmiger Drosselkörper aus elastischem Material umgreift, welcher Drosselkörper zwischen sich und einer benachbarten, mit in Umfangsrichtung voneinander beabstandeten und in Durchflussrichtung orientierten Regulierausnehmungen versehenen Umfangsmantelfläche einen Steuerspalt begrenzt, dessen Durchtrittsquerschnitt durch den sich unter der beim Durchströmen bildenden Druckdifferenz verformenden Drosselkörper veränderbar ist.

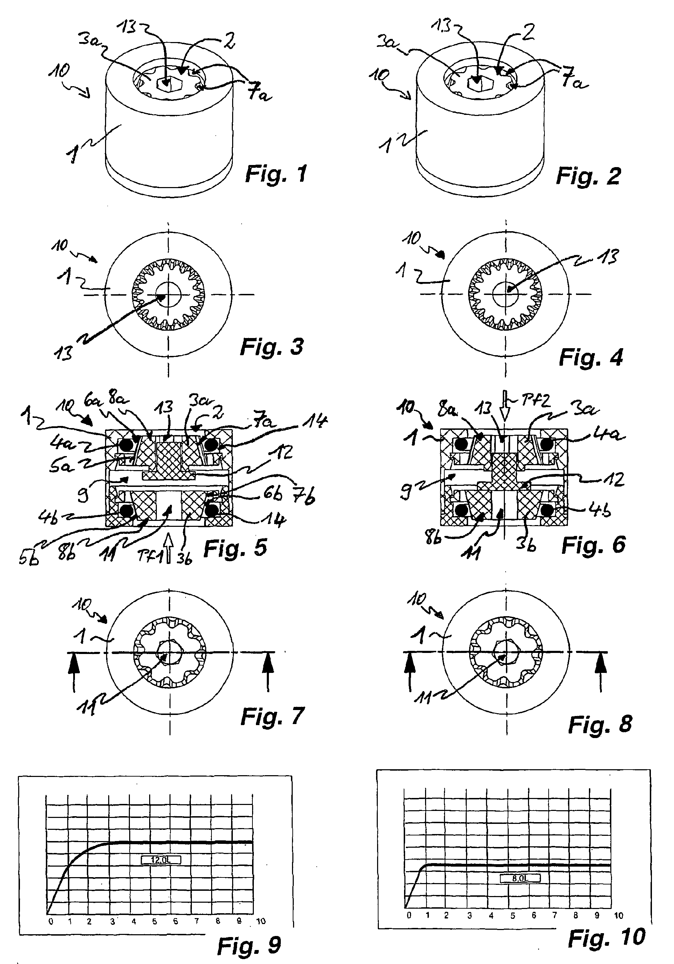

Aus Figur 2 der DE 198 51 151 A1 ist bereits ein Durchflussmengenregler der eingangs erwähnten Art bekannt. Der vorbekannte Durchflussmengenregler weist in seinem Reglergehäuse einen Drosselkörper auf, der aus elastischem Material besteht und unter dem Druck des durchströmenden Wassers verformbar ist. Dieser Drosselkörper begrenzt zwischen sich und dem benachbarten Gehäuseinnenumfang einen Steuerspalt, dessen Durchtrittsquerschnitt durch den sich unter der beim Durchströmen bildenden Druckdifferenz verformenden Drosselkörper veränderbar ist. Dabei bildet der Gehäuseinnenumfang eine, mit in Umfangsrichtung voneinander beabstandeten und in Durchflussrichtung orientierten Regulierausnehmungen versehene Umfangsmantelfläche.

Der vorbekannte Durchflussmengenregler ist für unterschiedliche Durchflussleistungen vorgesehen. Um dazu den Durchflussquerschnitt des Steuerspalts zwischen zwei Durchflussleistungen verändern zu können, ist eine Änderung der Relativposition von Drosselkörper und Umfangsmantelfläche möglich. Wird der vorbekannte Durchflussmengenregler von oben nach unten durchströmt, so verformt sich der Drosselkörper je nach Druck des durchströmenden Wassers und nähert sich dadurch den Nutflanken einer ersten Nut an, wodurch die Strömung auf einen ersten Soll-Wert begrenzt wird. Nimmt man den in Figur 2 der DE 198 51 151 A1 dargestellten Durchflussmengenregler aus der Wasserleitung heraus und dreht ihn so um, dass er in einer um 180° gedrehten Lage angeordnet ist, so ist der Zwischenraum zwischen dem Drosselkörper und den Nutflanken der nun maßgebenden zweiten Nut größer, so dass jetzt ein anderer Sollwert der Strömung entsteht.

Aus Figur 4 der DE 198 51 151 A1 ist ein Durchflussmengenregler bekannt, der ein scheibenförmiges Reglergehäuse hat. Auf den einander abgewandten Scheibenstirnseiten ist jeweils eine Aufnahmenut vorgesehen, die zur Aufnahme des Drosselkörpers bestimmt sind. Diese Aufnahmenuten weisen an ihren äußeren Umfangsmantelflächen einen unterschiedlichen Außendurchmesser auf, der die verschiedenen Sollwerte der entsprechenden Steuerspalte bestimmt. Durch Aufclipsen eines Vorsatzsiebes auf die jeweilige Scheibenstirnseite des Reglergehäuses wird der Drosselkörper in der dem gewünschten Soll-Wert entsprechenden Aufnahmenut sicher gehalten.

In den Figuren 7 und 8 der DE 198 51 151 A1 ist ein Durchflussmengenregler dargestellt, bei der die den Steuerspalt begrenzende Umfangsmantelfläche durch Trennwände gebildet ist, die mit dem Reglergehäuse über Schwach- oder Biegestellen verbunden sind. Diese Trennwände werden auf ihrer dem Steuerspalt abgewandten Seiten durch Bogenkeile beaufschlagt, die an einen von außen verdrehbaren Drehschieber angeformt sind. Verdreht man den Drehschieber, so drücken die Bogenkeile die entsprechenden Trennwände radial nach innen, wodurch der lichte Durchströmquerschnitt verändert und der Soll-Wert der Begrenzungsströmung verstellt wird.

Das Dokument DE 10228490C1 zeigt ebenfalls einen relevanten Stand der Technik.

Die vorbekannten Durchflussmengenregler sind jedoch vergleichsweise aufwändig in ihrer Herstellung und Konstruktion.

Es besteht daher insbesondere die Aufgabe, einen Durchflussmengenregler der eingangs erwähnten Art zu schaffen, der eine Veränderung der maximalen Durchflussleistung erlaubt und der dennoch vergleichsweise einfach in seiner Herstellung und Konstruktion ist.

Die erfindungsgemäße Lösung dieser Aufgabe besteht bei dem Durchflussmengenregler der eingangs erwähnten Art insbesondere darin, dass zwei in Längserstreckung des Durchtrittskanals hintereinander angeordnete Regeleinrichtungen mit den im Oberbegriff des Anspruchs 1 angegebenen Merkmalen vorgesehen sind, dass die beiden Regeleinrichtungen für unterschiedliche Durchflussleistungen und/oder unterschiedliche Druckbereiche ausgebildet sind und dass die Regeleinrichtung für die geringere Durchflussleistung und/oder den geringeren Druckbereich zusätzlich zu ihrem Steuerspalt wenigstens eine als Bypasskanal für die Regeleinrichtung wirkende Durchtrittsöffnung hat, die öffen- und schließbar ist und für die höhere Durchflussleistung beziehungsweise den höheren Druckbereich geöffnet und für die geringere Durchflussleistung beziehungsweise den geringeren Druckbereich geschlossen ist.

Bei dem erfindungsgemäßen Durchflussmengenregler sind zwei Regeleinrichtungen vorgesehen, die für unterschiedliche Durchflussleistungen und/oder verschiedene Druckbereiche ausgebildet sind. Für die geringere Durchflussleistung beziehungsweise den geringeren Druckbereich ist die zumindest eine Durchtrittsöffnung an der für die geringere Durchflussmenge beziehungsweise den geringeren Druckbereich bestimmten Regeleinrichtung geschlossen, so dass das Durchströmmedium, beispielsweise Wasser, sowohl den Fließweg zwischen Zentralkörper und Drosselkörper der Regeleinrichtung für die höhere Durchflussleistung beziehungsweise den höheren Druckbereich als auch den Fließweg zwischen Zentralkörper und Drosselkörper der Regeleinrichtung für die geringere Durchflussleistung beziehungsweise den geringeren Druckbereich passieren muss. Dabei wird die Charakteristik des erfindungsgemäßen Durchflussmengenreglers durch die, für die geringere Durchflussleistung beziehungsweise den geringeren Druckbereich bestimmte Regeleinrichtung festgelegt.

Für die höhere Durchflussleistung beziehungsweise den höheren Druckbereich ist die zumindest eine Durchtrittsöffnung an der Regeleinrichtung für die geringere Durchflussmenge beziehungsweise den geringeren Druckbereich geöffnet, so dass das Durchströmmedium, beispielsweise Wasser, nur den Fließweg zwischen Zentralkörper und Drosselkörper der Regeleinrichtung für die höhere Durchflussleistung beziehungsweise den höheren Druckbereich, jedoch nicht den Fließweg zwischen Zentralkörper und Drosselkörper der Regeleinrichtung für die geringere Durchflussleitung beziehungsweise den geringeren Druckbereich passieren muss, sondern die Regeleinrichtung für die geringere Durchflussleitung beziehungsweise den geringeren Druckbereich durch die Durchtrittsöffnung umgeht. In diesem Fall wird die Charakteristik des erfindungsgemäßen Durchflussmengenreglers nur durch die Regeleinrichtung für die höhere Durchflussleistung beziehungsweise den höheren Druckbereich bestimmt. Somit kann die maximale Durchflussleistung beziehungsweise der vorgesehene Druckbereich einfach und schnell durch Öffnen oder Schließen der erfindungsgemäß vorgesehenen Durchtrittsöffnung verändert werden.

Der erfindungsgemäße Durchflussmengenregler kann beispielsweise in Gaswandheizgeräten und Elektrodurchlauferhitzern vorteilhaft eingesetzt werden, in denen eine Durchflussmenge des zur Erhitzung bestimmten Wassers an die im Sommer und Winter unterschiedlichen Vorlauftemperaturen anzupassen ist.

Eine bevorzugte Weiterbildung gemäß der Erfindung sieht vor, dass die zumindest eine Durchtrittsöffnung in Abhängigkeit von der Durchströmrichtung öffen- und schließbar ist. Bei dieser weiterbildenden Ausführungsform muss der in einer Wasserleitung befindliche Durchflussmengenregler lediglich gedreht werden, um dessen Charakteristik, nämlich die Durchflussleistung und/oder die vorgesehene Durchflussmenge, auf den gewünschten Wert auszurichten.

Zum Einstellen der maximalen Durchflussleistung beziehungsweise des vorgesehenen Druckbereiches kann bevorzugt ein zwischen einer Offenstellung und einer Schließstellung verstellbares Schließelement zum Öffnen und Verschließen der Durchtrittsöffnung(en) der Regeleinrichtung für die geringere Durchflussleistung beziehungsweise den geringeren Druckbereich vorgesehen sein.

Dabei ist es zweckmäßig, wenn das Schließelement als Schließzapfen ausgebildet ist und in der Regeleinrichtung für die höhere Durchflussleistung beziehungsweise den höheren Druckbereich axial verschiebbar gelagert ist. Dies ermöglicht ein einfaches Verstellen des Schließelementes zwischen der Offen-und der Schließstellung. Zudem kann das Schließelement platzsparend in den Durchflussmengenregler integriert werden, was eine geringe Baugröße des Durchflussmengenreglers erlaubt.

Besonders vorteilhaft ist es, wenn die Regeleinrichtung für die höhere Durchflussleistung beziehungsweise den höheren Druckbereich eine zu dem dieser Regeleinrichtung zugeordneten axialen Ende des Reglergehäuses hin offene Führungsöffnung für das Schließelement aufweist. Strömt das Durchströmmedium von diesem axialen Ende des Reglergehäuses her ein, wird das Schließelement von dem in die Führungsöffnung einströmenden Medium beaufschlagt und selbsttätig in seine Schließposition verstellt. Bei umgekehrter Durchflussrichtung wird das Schließelement ebenfalls von dem in diesem Fall durch die Durchtrittsöffnung(en) einströmenden Medium beaufschlagt und in seine Offenstellung verstellt. Die Umstellung auf die gewünschte maximale Durchflussleistung erfolgt somit automatisch durch die Wahl der Durchflussrichtung des Mediums durch den Durchflussmengenregler. Ein manuelles Positionieren des Schließelements ist nicht erforderlich.

Um die Fließrichtung im Gehäuseinneren des erfindungsgemäßen Durchflussmengenreglers zu verändern, und um das Schließelement in die einer bestimmten Durchflussleistung beziehungsweise einem bestimmten Druckbereich zugeordnete Relativposition bringen zu können, sieht eine Weiterbildung gemäß der Erfindung vor, dass der Durchflussmengenregler in einem in die Fluidleitung zwischengeschalteten Wendeteil vorgesehen ist, und dass das Wendeteil zum Ändern der Durchströmrichtung im Durchflussmengenregler bei ansonsten gleichbleibender Durchflussrichtung in den benachbarten Leitungsabschnitten der Fluidleitung drehbar in der Fluidleitung gelagert ist.

Weitere Merkmale der Erfindung ergeben sich aus der folgenden Beschreibung eines erfindungsgemäßen Ausführungsbeispiels in Verbindung mit den Ansprüchen sowie den Zeichnungen. Die einzelnen Merkmale können je für sich oder zu mehreren bei einer Ausführungsform gemäß der Erfindung verwirklicht sein.

Es zeigt:
- Fig. 1 bis 10: einen Durchflussmengenregler, mit zwei Regeleinrich- tungen, wobei der Durchflussmengenregler in einer Perspektivansicht (Fig.1 und 2), in einer Draufsicht auf die eine Gehäuse-Stirnseite (Fig.3 und 4), in einem Längsschnitt (Fig.5 und 6), in einer Draufsicht auf die andere Gehäusestirnseite (Fig. 7 und 8) und in den die unterschiedlichen Durchflussmengen ausweisenden Leistungskurven seiner beiden Funktionsstellungen gemäß den Figuren 1, 3, 5 und 7 einerseits und den Figuren 2, 4, 6 und 8 andererseits gezeigt ist,

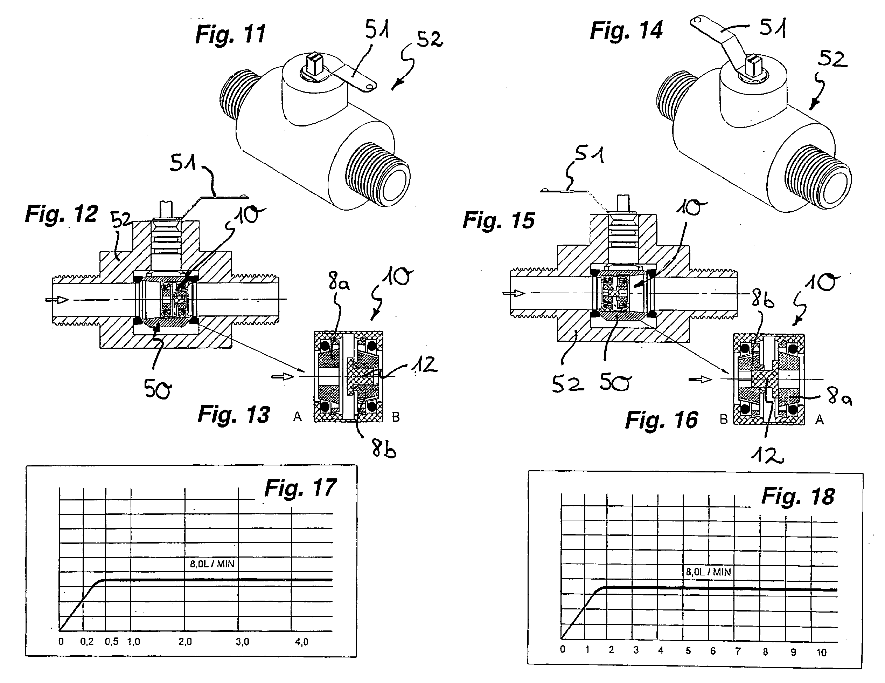

- Fig. 11 bis 16: ein Wendeteil zum Ändern der Durchströmrichtung des im Wendeteil befindlichen Durchflussmengenreglers, wobei dieses Wendeteil in seinen beiden Einstell- positionen in einer perspektivischen Ansicht (Fig.11, 14) in einem Längsschnitt (Fig.12, 15) und in einer längsgeschnittenen Detaildarstellung im Bereich des im Wendeteil befindlichen Durchflussmengenreglers (Fig.13, 16) gezeigt ist, und
- Fig. 17 bis 18: die Leistungskurven eines gemäß den Fig.1 bis 10 beziehungsweise 11 bis 16 ausgebildeten Durchfluss- mengenreglers, der hier allerdings für unterschied- liche Druckbereiche vorgesehen ist.

Die Figuren 1 bis 10 zeigen einen Durchflussmengenregler 10, der in eine Fluidleitung, insbesondere in eine sanitäre Wasserleitung, zwischengeschaltet werden kann, um die pro Zeiteinheit durchströmende Wassermenge unabhängig vom Wasserdruck auf einen bestimmten Maximalwert anzupassen. Der Durchflussmengenregler 10 weist ein Reglergehäuse 1 auf, das in einem Durchtrittskanal 2 zwei Regeleinrichtungen 8a, 8b mit jeweils einem Zentralkörper 3a, 3b hat. Die Zentralkörper 3a, 3b werden jeweils von einem ringförmigen Drosselkörper 4a, 4b aus elastischem Material umgriffen, die zwischen sich und einer benachbarten Umfangsmantelfläche 5a, 5b einen Steuerspalt 6a, 6b begrenzen (Fig.5).

Der Durchtrittsquerschnitt der Steuerspalte 6a, 6b ist durch einen sich unter der beim Durchströmen des Fluids bildenden Druckdifferenz verformenden Drosselkörper 4a, 4b veränderbar. Dabei sind an der Umfangsmantelfläche 5a, 5b in Umfangsrichtung voneinander beabstandete und in Durchflussrichtung orientierte Regulierausnehmungen 7a, 7b vorgesehen, in welche sich der Drosselkörper 4a, 4b bei erhöhtem Druck des Fluids einformen kann.

Bei der Regeleinrichtung 8a ist in Ruhelage der lichte Durchflussquerschnitt des Steuerspalts 6a größer als der lichte Durchflussquerschnitt des Steuerspalts 6b der Regeleinrichtung 8b, wodurch die Regeleinrichtung 8a für eine größere maximale Durchflussleistung als die Regeleinrichtung 8b ausgebildet ist. Die beiden Regeleinrichtungen 8a, 8b sind mit Abstand zueinander in dem Reglergehäuse 1 angeordnet und begrenzen mit ihren einander zugewandten Enden einen Innenraum 9.

Die Regeleinrichtung 8b für die geringere Durchflussleistung hat in ihrem Zentralkörper 3b eine Durchtrittsöffnung 11, die eine Durchgangsverbindung von der der Regeleinrichtung 8b zugeordneten Zuströmseite des Durchflussmengenreglers 10 und dem Innenraum 9 herstellt.

In dem Zentralkörper 3a der Regeleinrichtung 8a für die höhere Durchflussleistung ist in einer Führungsöffnung 13, welche sich von der der Regeleinrichtung 8a zugeordneten Zuströmseite des Durchflussmengenreglers 10 in den Innenraum 9 erstreckt, ein axial verschiebbares Schließelement 12 gelagert, wobei der Innenraum 9 gegenüber der Führungsöffnung 13 abgedichtet ist.

Zum Verändern der maximalen Durchflussleistung wird die Durchflussrichtung Pf1, Pf2 durch den Durchflussmengenregler 10 verändert.

Bei der Durchflussrichtung Pf1 gemäß Figur 5 drückt das durch die Durchtrittsöffnung 11 in den Innenraum 9 strömende Fluid das Schließelement 12 in die Führungsöffnung 13, so dass die Durchtrittsöffnung 11 geöffnet ist und als Bypass für die die geringere Durchflussleistung aufweisende Regeleinrichtung 8b wirkt, die somit funktionslos ist. Das Fluid strömt aus dem Innenraum 9 weiter durch die Regeleinrichtung 8a für die höhere Durchflussleistung, mit der die Durchflussleistung geregelt wird.

Bei der Durchflussrichtung Pf2 gemäß Figur 6 drückt das in die Führungsöffnung 13 einströmende Fluid das Schließelement 12 in dessen Schließstellung, in der es den Zentralkörper 3b der Regeleinrichtung 8b beaufschlagt und somit die Durchtrittsöffnung 11 verschließt. Das Fluid strömt durch die Regeleinrichtung 8a, entgegen dessen eigentlicher Nutzungsrichtung, in den Innenraum 9 und weiter durch die Regeleinrichtung 8b für die geringere Durchflussleistung. Die tatsächliche Durchflussleistung wird dabei von der Regeleinrichtung 8b für die geringere Durchflussleistung bestimmt, so dass die Regeleinrichtung 8a für die höhere Durchflussleistung praktisch funktionslos ist.

Der hier dargestellte Durchflussmengenregler 10 ist beispielsweise in Gaswandheizgeräten oder Elektrodurchlauferhitzern vorteilhaft einsetzbar, in denen die Durchflussmenge des zur Erhitzung bestimmten Wassers an die im Sommer und im Winter unterschiedlichen Vorlauftemperaturen des Wassers anzupassen ist.

In den Fig.11 bis 16 ist ein Wendeteil 50 dargestellt, dass zum Ändern der Durchströmrichtung im Durchflussmengenregler 10 bei ansonsten gleichbleibender Durchflussrichtung in den benachbarten Leistungsabschnitten der Fluidleitung bestimmt ist. Wie aus einem Vergleich der Fig.11 bis 13 einerseits und der Fig.14 bis 16 andererseits deutlich wird, ist das Wendeteil 50 dazu drehbar in der Fluidleitung gelagert. Um die Fließrichtung im Gehäuseinneren des Durchflussmengenreglers 10 verändern zu können, und um das Schließelement 12 in die einer bestimmten Durchflussleistung und/oder einem bestimmten Druckbereich zugeordnete Offen- oder Schließstellung bringen zu können, kann der Durchflussmengenregler 10 in dem Wendeteil 50 gehalten sein, welches zum Ende der Durchströmrichtung im Durchflussmengenregler 10 bei ansonsten gleichbleibender Durchflussrichtung in den benachbarten Leistungsabschnitten drehbar in der Fluidleitung gelagert ist. Dieses Wendeteil ist dazu in einem kugelhahn-artigen Leistungsadapter 52 drehbar gelagert, der in eine Fluidleitung einsetzbar ist. Dieser Leitungsadapter, der auch als Kugelhahn verwendet und dessen Wendeteil 50 gleichzeitig auch als Ventilkugel dienen kann, ist über einen Hebel 51 von außen betätigbar.

In den Fig.9 und 10 sind die Durchflusskurven dargestellt, die sich einstellen, wenn der Durchflussmengenregler 10 in der in Fig.5 gezeigten Funktionsstellung einerseits und in der in Fig.6 dargestellten Funktionsstellung andererseits betrieben wird.

In den Fig.17 und 18 sind die Leistungskurven eines Durchflussmengenreglers dargestellt, der in Aufbau und Konstruktion dem Durchflussmengenregler 10 in den Fig.1 bis 10 einerseits und den Fig.11 bis 16 andererseits entspricht. Aus den Leistungskurven gemäß den Fig.17 und 18 wird jedoch deutlich, dass dieser Durchflussmengenregler hier für unterschiedliche Druckbereiche vorgesehen ist.

Es versteht sich, dass durch eine Veränderung der Durchflussrichtung in dem hier dargestellten Durchflussmengenregler gleichzeitig auch eine Spülströmung erzeugt wird, welche die eventuell stirnseitig am Durchflussmengenregler angeschwemmten Schmutzpartikel mitreißt und aus dem Bereich des Durchflussmengenreglers wieder entfernt.

Bei zusammenschauender Betrachtung der Figuren wird deutlich, dass der Durchflussmengenregler 10 modular aufgebaut ist, derart, dass zumindest eine der Regeleinrichtungen 8a, 8b bei Bedarf gegen eine andere Regeleinrichtung ausgetauscht werden kann, die sich durch eine andere Durchflussleistung beziehungsweise einen anderen Druckbereich auszeichnet. Durch diesen modularen Aufbau des hier dargestellten Durchflussmengenreglers 10 kann dieser in seiner Charakteristik auf die benötigten Durchflussleistungen beziehungsweise Druckbereiche ohne weiteres angepasst werden.

## Patentansprüche

1. Durchflussmengenregler (10) mit einem Reglergehäuse (1), das (1) in einem Durchtrittskanal (2) zumindest eine Regeleinrichtung (8a) mit einem Zentralkörper (3a) aufweist, den ein ringförmiger Drosselkörper (4a) aus elastischem Material umgreift, welcher Drosselkörper (4a) zwischen sich und einer benachbarten, mit in Umfangsrichtung voneinander beabstandeten und in Durchflussrichtung (Pf1, Pf2) orientierten Regulierausnehmungen (7a) versehenen Umfangsmantelfläche (5a) einen Steuerspalt (6a) begrenzt, dessen Durchtrittsquerschnitt durch den sich unter der beim Durchströmen bildenden Druckdifferenz verformenden Drosselkörper (4a) veränderbar ist, **dadurch gekennzeichnet, dass** zwei in Längserstreckung des Durchtrittskanals (2) hintereinander angeordnete Regeleinrichtungen (8a, 8b) vorgesehen sind, dass die beiden Regeleinrichtungen (8a, 8b) für unterschiedliche Durchflussleistungen und/oder unterschiedliche Druckbereiche ausgebildet sind, und dass die Regeleinrichtung (8b) für die geringere Durchflussleistung und/oder den geringeren Druckbereich wenigstens einen Bypasskanal oder dergleichen Durchtrittsöffnung (11) hat, die öffen- und schließbar ist und für die höhere Durchflussleistung beziehungsweise den höheren Druckbereich geöffnet und für die geringere Durchflussleistung beziehungsweise den geringeren Druckbereich geschlossen ist.

2. Durchflussmengenregler nach Anspruch 1, **dadurch gekennzeichnet, dass** die zumindest eine Durchtrittsöffnung (11) in Abhängigkeit von der Durchströmrichtung (Pf1, PF2) öffen- und schließbar ist.

3. Durchflussmengenregler nach Anspruch 1 oder 2, **dadurch gekennzeichnet, dass** die Regeleinrichtungen (8a, 8b) mit Abstand zueinander in dem Reglergehäuse (1) angeordnet sind.

4. Durchflussmengenregler nach einem der Ansprüche 1 bis 3, **dadurch gekennzeichnet, dass** ein zwischen einer Offenstellung und einer Schließstellung verstellbares Schließelement (12) zum Öffnen und Verschließen der Durchtrittsöffnung(en) (11) der Regeleinrichtung (8b) für die geringere Durchflussleistung vorgesehen ist.

5. Durchflussmengenregler nach einem der Ansprüche 1 bis 4, **dadurch gekennzeichnet, dass** das Schließelement (12) als Schließzapfen ausgebildet ist und in der Regeleinrichtung (8a) für die höhere Durchflussleistung axial verschiebbar gelagert ist.

6. Durchflussmengenregler nach einem der Ansprüche 1 bis 5, **dadurch gekennzeichnet, dass** die Regeleinrichtung (8a) für die höhere Durchflussleistung eine zu dem dieser Regeleinrichtung (8a) zugeordneten axialen Ende des Reglergehäuses (1) hin offene Führungsöffnung (13) für das Schließelement (12) aufweist.

7. Durchflussmengenregler nach einem der Ansprüche 1 bis 6, **dadurch gekennzeichnet, dass** die Zentralkörper (3a, 3b) jeweils als sich vorzugsweise gleichmäßig verjüngende Steuerkegel ausgestaltet sind.

8. Durchflussmengenregler nach einem der Ansprüche 1 bis 7, **dadurch gekennzeichnet, dass** die Drosselkörper (4a, 4b) jeweils am Gehäuseinnenumfang des Reglergehäuses (1) in einer Nut (14) oder dergleichen Drosselkörper-Aufnahme gehalten sind.

9. Durchflussmengenregler nach einem der Ansprüche 1 bis 8, **dadurch gekennzeichnet, dass** der Durchflussmengenregler (10) in einem in die Fluidleitung zwischengeschalteten Wendeteil vorgesehen ist und dass das Wendeteil zum Ändern der Durchströmrichtung im Durchflussmengenregler (10) bei ansonsten gleichbleibender Durchflussrichtung in den benachbarten Leitungsabschnitten der Fluidleitung drehbar in der Fluidleitung gelagert ist.

## Claims

1. Flow regulator (10) having a regulator housing (1), said housing (1) comprising in a flow channel (2) at least one regulating device (8a) with a central body (3a) surrounded by an annular throttle member (4a) made of elastic material, said throttle member (4a) defining a control slot (6a) between itself and an adjacent circumferential outer surface (5a) provided with regulating recesses (7a) which are circumferentially spaced apart and oriented in the direction of flow (Pf1, Pf2), the cross section of flow of said control slot (6a) being variable by the throttle member (4a) that deforms under the pressure difference formed during throughflow, **characterised in that** two regulating devices (8a, 8b) are provided which are arranged one behind the other in the longitudinal direction of the flow channel (2), **in that** the two regulating devices (8a, 8b) are designed for different flow rates and/or different pressure ranges, and **in that** the regulating device (8b) has at least one bypass channel or similar throughflow opening (11) for the lower flow rate and/or the lower pressure range, this opening being capable of being opened and closed and is opened for the higher flow rate or the higher pressure range and is closed for the lower flow rate or for the lower pressure range.

2. Flow regulator according to claim 1, **characterised in that** the at least one throughflow opening (11) can be opened and closed depending on the direction of flow (Pf1, Pf2).

3. Flow regulator according to claim 1 or 2, **characterised in that** the regulating devices (8a, 8b) are arranged at a spacing from one another in the regulator housing (1).

4. Flow regulator according to one of claims 1 to 3, **characterised in that** a closing element (12) which is movable between an open position and a closed position is provided for opening and closing the throughflow opening(s) (11) of the regulating device (8b) for the lower flow rate.

5. Flow regulator according to one of claims 1 to 4, **characterised in that** the closing element (12) is constructed as a shut-off cock and is mounted in axially movable manner in the regulating device (8a) for the higher flow rate.

6. Flow regulator according to one of claims 1 to 5, **characterised in that** the regulating device (8a) for the higher flow rate has a guide opening (13) for the closure element (12) which is open towards the axial end of the regulator housing (1) associated with this regulating device (8a).

7. Flow regulator according to one of claims 1 to 6, **characterised in that** the central bodies (3 a, 3b) are each formed as preferably uniformly tapering control cones.

8. Flow regulator according to one of claims 1 to 7, **characterised in that** the throttle members (4a, 4b) are each held on the inner circumference of the regulator housing (1) in a groove (14) or similar receptacle for a throttle member.

9. Flow regulator according to one of claims 1 to 8, **characterised in that** the flow regulator (10) is provided in a turning part interposed in the fluid pipe and **in that** the turning part is rotatably mounted in the fluid pipe in order to change the direction of flow in the flow regulator (10) while maintaining the same direction of flow elsewhere in the adjacent sections of the fluid pipe.

## Revendications

1. Régulateur de débit (10) comprenant un carter (1), ledit carter (1) comportant, dans un canal de passage (2), au moins un système de régulation (8a) doté d'un corps central (3a) ceinturant un corps annulaire d'étranglement (4a) en un matériau élastique, lequel corps d'étranglement (4a) délimite, entre lui-même et une surface voisine d'enveloppe périphérique (5a) pourvue d'évidements de régulation (7a) distants les uns des autres dans la direction périphérique et orientés dans la direction de l'écoulement (Pf1, Pf2), un interstice de commande dont la section transversale de passage peut être modifiée par ledit corps d'étranglement (4a) se déformant sous l'action de la différence de pression développée lors de l'écoulement, **caractérisé par** la présence de deux systèmes de régulation (8a, 8b) agencés en succession sur l'étendue longitudinale du canal de passage (2) ; par le fait que les deux systèmes de régulation (8a, 8b) sont conçus ou réalisés pour des débits différents et/ou pour des plages de pression différentes ; et par le fait que le système de régulation (8b) affecté au débit inférieur, et/ou à la plage de pressions inférieure, présente au moins un canal de dérivation ou un orifice similaire de passage (11) qui peut être ouvert et fermé, est respectivement ouvert pour le débit supérieur ou la plage de pressions supérieure, et est respectivement fermé pour le débit inférieur ou la plage de pressions inférieure.

2. Régulateur de débit selon la revendication 1, **caractérisé par le fait que** l'au moins un orifice de passage (11) peut être ouvert et fermé en fonction de la direction de l'écoulement (Pf1, Pf2).

3. Régulateur de débit selon la revendication 1 ou 2, **caractérisé par le fait que** les systèmes de régulation (8a, 8b) sont logés dans le carter (1) dudit régulateur, à distance l'un vis-à-vis de l'autre.

4. Régulateur de débit selon l'une des revendications 1 à 3, **caractérisé par** la présence d'un élément d'obturation (12) pouvant être réglé entre une position d'ouverture et une position de fermeture, en vue de l'ouverture et de la fermeture de l'orifice ou des orifices (11) du système de régulation (8b) affecté au débit inférieur.

5. Régulateur de débit selon l'une des revendications 1 à 4, **caractérisé par le fait que** l'élément d'obturation (12) est réalisé sous la forme d'un tenon obturateur et est monté à coulissement axial dans le système de régulation (8a) affecté au débit supérieur.

6. Régulateur de débit selon l'une des revendications 1 à 5, **caractérisé par le fait que** le système de régulation (8a), affecté au débit supérieur, présente un orifice de guidage (13) destiné à l'élément d'obturation (12) et ouvert en direction de l'extrémité axiale du carter (1) du régulateur qui est associée à ce système de régulation (8a).

7. Régulateur de débit selon l'une des revendications 1 à 6, **caractérisé par le fait que** les corps centraux (3a, 3b) sont réalisés sous la forme de cônes de commande respectifs munis, de préférence, de rétrécissements uniformes.

8. Régulateur de débit selon l'une des revendications 1 à 7, **caractérisé par le fait que** les corps d'étranglement (4a, 4b) sont respectivement retenus, sur le pourtour intérieur du carter (1) dudit régulateur, dans une rainure (14) ou un logement analogue dédié auxdits corps d'étranglement.

9. Régulateur de débit selon l'une des revendications 1 à 8, **caractérisé par le fait que** ledit régulateur de débit (10) est prévu dans une pièce basculante interposée dans le conduit de fluide ; et **par le fait que** ladite pièce basculante est montée à rotation dans le conduit de fluide en vue de modifier la direction de l'écoulement, dans ledit régulateur de débit (10), pour une direction d'écoulement par ailleurs inchangée dans les tronçons dudit conduit de fluide qui occupent des positions voisines.
